Europäisches Patentamt

European Patent Office

Office européen des brevets

(19)

(11) Numéro de publication: **0 117 774**
A1

## (12) DEMANDE DE BREVET EUROPEEN

(21) Numéro de dépôt: 84400122.2

(22) Date de dépôt: 20.01.84

(51) Int. Cl.³: **B 66 C 23/64,** B 66 C 23/70,
B 32 B 5/24

(30) Priorité: 21.01.83 FR 8300905

(43) Date de publication de la demande: 05.09.84
Bulletin 84/36

(84) Etats contractants désignés: AT BE CH DE FR GB IT LI
LU NL SE

(71) Demandeur: CREUSOT-LOIRE, 42 rue d'Anjou,
F-75008 Paris (FR)

(72) Inventeur: Jouffray, Maurice, 61 rue des Sports,
F-69500 Bron (FR)

(74) Mandataire: Saint-Martin, René et al,
CREUSOT-LOIRE 15 rue Pasquier, F-75383 Paris
Cedex 08 (FR)

(54) Flèche télescopique de grue.

(57) La présente invention se rapporte à une flèche téloscopique de grue mobile.

La flèche télescopique selon l'invention comprend des tronçons tubulaires s'emboitant les uns dans les autres de manière à être guidés les uns par rapport aux autres par l'intermédiaire d'organes de guidage, et elle est caractérisée par le fait que les semelles (5, 6) et les parois latérales (7, 8) des tronçons sont constituées par des structures sandwichs composées chacune de peaux superficielles (51, 61, 71, 81) recouvrant une âme centrale en matière plastique (52, 62, 72, 82).

## Flèche télescopique de grue

La présente invention se rapporte à une flèche télescopique de grue mobile.

Les flèches télescopiques de grue mobiles sont constituées de tronçons télescopiques qui sont emboités les uns dans les autres et guidés relativement les uns par rapport aux autres. Ces tronçons sont déplacés longitudinalement par des vérins de manière à étendre ou à rétracter la flèche.

Les grues mobiles sont équipées actuellement de flèches en acier.

Elles sont soumises à des contraintes quand à la limitation de charge par essieu et à la limitation de charge entre essieux. Les flèches en acier représentent un pourcentage non négligeable du poids total roulant de la grue.

Les grues moyennes sont des grues monomoteur dont la puissance installée est déterminée uniquement par la circulation routière, la puissance éxigée pour le déplacement étant notablement supérieure à celle utilisée pour le travail propre de la grue. Le poids total roulant dans lequel intervient le poids de la flèche joue sur la consommation d'énergie.

Du fait de la construction en acier des flèches actuelles, et de la disposition pratique qui loge généralement la flèche au-dessus de la grue pour le transport, le centre de gravité est situé très haut ce qui pose des problèmes quand au freinage et à la tenue de route. Il se produit un transfert des charges important lors du freinage ce qui conduit à un renforcement important du freinage sur l'essieu avant. En conséquence cet essieu, particulièrement lorsqu'il est moteur, diffère notablement des essieux de poids lourds classiques.

La construction en acier des flèches actuelles n'amortit pas et même amplifie les vibrations inévitables du moteur diésel et des transmissions hydrauliques.

La présente invention a pour but de fournir une flèche télescopique qui, pour une performance égale à celle d'une flèche classique en acier, présente un poids inférieur. Cette conception allégée permet de réduire la charge par essieu et de réduire le contre poids d'équilibrage. L'allègement des charges par essieu entraine une plus grande longévité des pneumatiques. La combinaison de l'allègement de la flèche et de l'abaissement du centre de gravité permet de réduire les couples de freinage sur l'essieu avant et procure une meilleure tenue de route. Cette conception allégée permet par ailleurs d'atténuer les phénomènes sonores et vibratoires et procure une économie de combustible.

La flèche télescopique selon l'invention comprend des tronçons tubulaires s'emboitant les uns dans les autres de manière à être guidés les uns par rapport aux autres par l'intermédiaire d'organes de guidage, et elle est caractérisée par le fait que les semelles et les parois latérales des tronçons sont constituées par des structures sandwichs composées chacune de peaux superficielles recouvrant une âme centrale en matière plastique.

Selon une caractéristique, les peaux superficielles des semelles sont constituées par un matériau composite formé de matière plastique renforcée de fibres et les peaux superficielles des structures sandwichs constituant les parois latérales sont en alliage léger.

Selon une autre caractéristique de l'invention, l'âme centrale de chaque structure sandwich est en mousse de plastique.

Selon une autre caractéristique de l'invention, les organes de guidage sont portés par les parois latérales.

L'invention va maintenant être décrite avec plus de détails en se référant à un mode de réalisation donné à titre d'exemple et représenté par les dessins annexés sur lesquels :

- la figure 1 est une vue d'ensemble d'une grue mobile équipée d'une flèche télescopique.

- la figure 2 représente une coupe transversale de la flèche télescopique, selon II-II de la figure 1.

- la figure 3 est une vue partielle selon III-III de la figure 2.

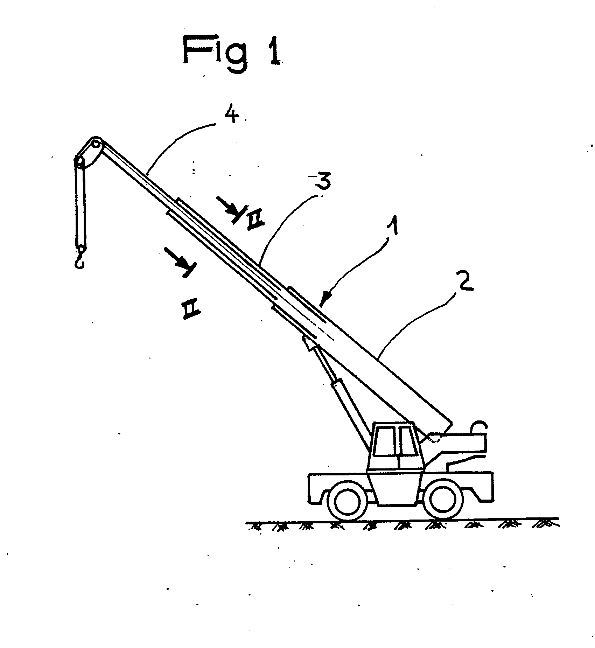

En se référant à la figure 1, une grue mobile équipée d'une flèche selon l'invention comprend un chassis porteur roulant sur le sol lequel porte une tourelle orientable. La flèche télescopique, désignée globalement par 1, est composée de plusieurs tronçons ou caissons tubulaires 2, 3 et 4 emboités les uns dans les autres. Le tronçon 2 est articulé à la tourelle, les autres tronçons 3, 4 coulissant dans ce tronçon. L'inclinaison de la flèche est donnée par un vérin articulé sur la tourelle et sur le tronçon de pied 2 de la flèche.

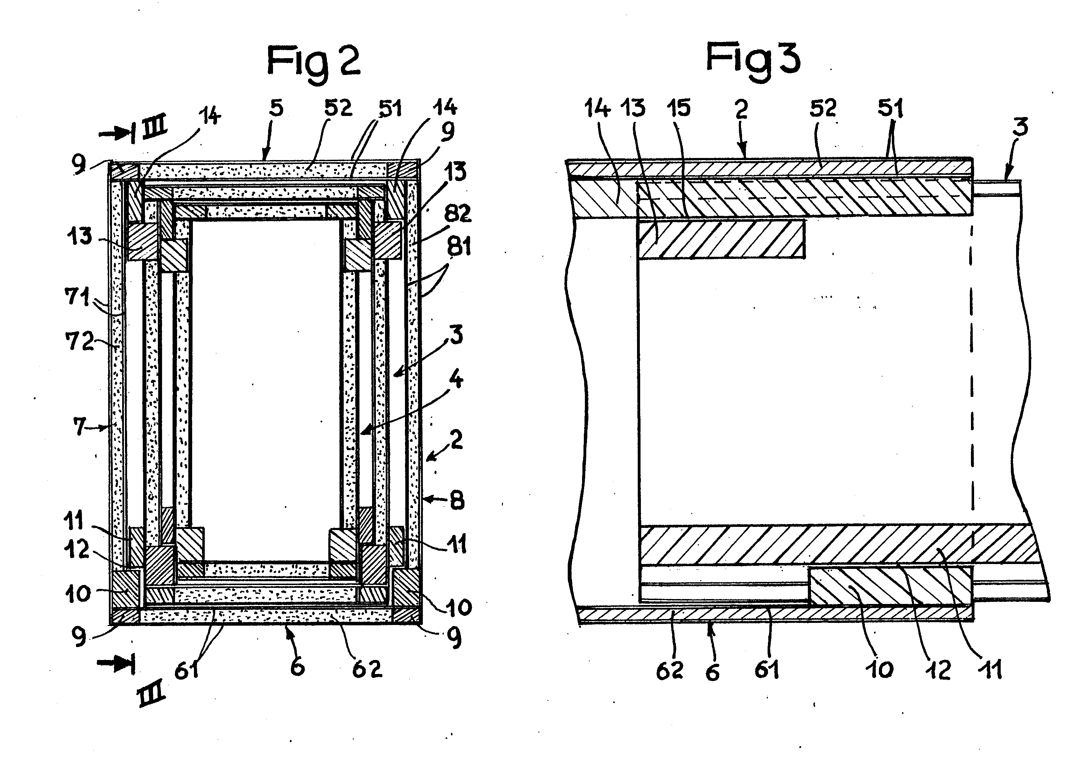

En se référant aux figures 2 et 3, chaque tronçon tubulaire 2, 3 ou 4 forme en coupe transversale un profil polygonal fermé. Les différents tronçons ont une structrure équivalente, aux dimensions près. Chaque tronçon est formé d'une semelle (ou membrure) supérieure 5 et d'une semelle (ou membrure) inférieure 6 réunies par des parois latérales 7 et 8. Chaque tronçon extérieur tel que 2 ceinture un tronçon intérieur adjacent tel que 3 en ménageant un jeu ou un espace annulaire dans lequel sont disposés les organes de guidage.

Les semelles 5 et 6 et les parois 7 et 8 de chaque tronçon télescopique sont réalisées au moyen d'une structure sandwich constituée par deux peaux superficielles 51, 61, 71, 81 recouvrant une âme centrale 52, 62, 72, 82 sur les deux faces. L'assemblage des peaux superficielles, de faibles épaisseurs, sur l'âme centrale, d'épaisseur plus forte, est assuré par des adhésifs de synthèse.

L'âme centrale 52, 62, 72, 82 qui sépare les peaux superficielles est constituée par une matière plastique alvéolaire ou une mousse plastique telle que par exemple une mousse de polyuréthanne.

Les peaux superficielles 51 et 61 des semelles sont constituées par un matériau composite constitué de matière plastique renforcée de fibres de carbone à haut module.

Les peaux superficielles 71 et 81 des flancs sont réalisées en alliage léger à base d'aluminium.

Les structures sandwichs des semelles et des parois latérales sont fixées rigidement en elles par collage, à l'aide de pièces disposées dans les angles et qui sont repérées 9.

Les tronçons adjacents sont guidés verticalement et latéralement par des organes de guidage qui sont portés par les flancs. Les semelles en raison de leur structure unidirectionnelle, sont mal adaptées pour porter les organes de guidage.

Chaque tronçon intérieur s'appuie sur le tronçon extérieur adjacent au moyen de glissières inférieures longitudinales 11 qui glissent sur des patins inférieurs 10 qui sont fixés à l'extrémité de ce tronçon extérieur, dans les angles inférieurs. Ces glissières longitudinales 11 sont fixées, de manière à être saillantes vers l'extérieur, aux parois 7 et 8 du tronçon intérieur. Elles glissent sur les patins selon des surfaces de glissement 12 qui sont parallèles aux membrures.

Le tronçon intérieur considéré s'appuie par ailleurs sur le tronçon extérieur au moyen de deux patins supérieurs 13 qui glissent sur deux glissières supérieures longitudinales qui sont fixées au dit tronçon extérieur, dans les angles supérieurs. Ces patins supérieurs 13 sont fixés de manière à être saillants vers l'extérieur, aux parois 7 et 8 du tronçon in-

4

térieur. Lors des déplacements du tronçon intérieur, les patins supérieurs 13 glissent sur les glissières longitudinales 14 selon des surfaces de glissement 15 qui sont parallèles aux semelles.

Les surfaces de frottement peuvent être soit du type plastique sur plastique soit plastique sur métal par collage d'une bande métallique en correspondance avec les patins.

Il est bien entendu que l'on peut sans sortir du cadre de l'invention, imaginer des variantes et des perfectionnements de détails et de même envisager l'emploi de moyens équivalents.

5

## REVENDICATIONS

1. Flèche télescopique de grue, comprenant des tronçons tubulaires s'emboitant les uns dans les autres de manière à être guidés les uns par rapport aux autres par l'intermédiaire d'organes de guidage, caractérisée par le fait que les semelles (5,6) et les parois latérales (7,8) des tronçons sont constituées par des structures sandwichs composées chacune de peaux superficielles (51,61,71,81) recouvrant une âme centrale en matière plastique (52,62,72,82).

2. Flèche selon la revendication 1, caractérisée par le fait que les peaux superficielles des semelles sont constituées par un matériau composite formé d'une matière plastique renforcée de fibres et que les peaux superficielles des parois latérales sont en alliage léger.

3. Flèche selon la revendication 1 ou 2, caractérisée par le fait que l'âme centrale des structures sandwichs est en mousse de plastique.

4. Flèche selon la revendication 2 caractérisée par le fait que les fibres sont des fibres de carbone.

5. Flèche selon la revendication 3 caractérisée par le fait que la mousse est une mousse de polyuréthanne.

6. Flèche selon l'une quelconque des revendications précédentes, caractérisé par le fait que les organes de guidage sont portés par les flancs.

7. Flèche selon la revendication 6, caractérisée par le fait que le guidage d'un tronçon intérieur dans un tronçon extérieur est assuré d'une part au moyen de glissières longitudinales (11) qui sont fixées, vers l'extérieur, aux parois latérales du dit tronçon intérieur et qui glissent sur des patins inférieurs (10) fixés à l'extrémité dudit tronçon extérieur et d'autre part au moyen de patins supérieurs (13) qui sont fixés sur les parois latérales dudit tronçon intérieur et qui glissent sur des glissières supérieures longitudinales (14) fixées au dit tronçon extérieur.

## Fig 1

Fig 2

Fig 3

0117774

**Office européen des brevets**

## RAPPORT DE RECHERCHE EUROPEENNE

Numéro de la demande

EP 84 40 0122

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl. 3) |
| Y | DE-A-2 634 081 (LEICHLEITNER) * Page 4, lignes 1-28 * | 1,2,4 | B 66 C 23/64 B 66 C 23/70 B 32 B 5/24 |
| | --- | | |
| Y | GB-A-1 555 271 (UNITEX) * Page 1, lignes 8-25; page 2, lignes 64-72 * | 1-5 | |
| | --- | | |
| A | FR-A-2 401 094 (HARNISCHFEGER CORP.) * Page 6, lignes 12-33 * | 6 | |
| | --- | | |
| A | DE-A-3 149 411 (THE WARNER & SWASEY CO.) * En entier * | 7 | |
| | --- | | |
| A | SCHIFF UND HAFEN, vol. 17, no. 4, avril 1965, pages 289-293, Hamburg, DE. F.X.P. SOEJADI: "Messungen an einem Ladebaum aus Glasfaser-Kunststoff" | | DOMAINES TECHNIQUES RECHERCHES (Int. Cl. 3) B 66 C B 32 B |
| | --- | | |
| A | US-A-4 003 168 (BRADY) | | |
| | --- | | |
| A | CH-A- 436 646 (DILL) | | |
| | --- | | |
| A | US-A-3 997 695 (GITT) | | |
| | --- -/- | | |

Le présent rapport de recherche a été établi pour toutes les revendications

| Lieu de la recherche | Date d'achèvement de la recherche | Examinateur |
|---|---|---|
| LA HAYE | 09-05-1984 | VAN DEN BERGHE E.J.J |

**Office européen des brevets**

# RAPPORT DE RECHERCHE EUROPEENNE

Numéro de la demande

EP 84 40 0122

| | DOCUMENTS CONSIDERES COMME PERTINENTS | | Page 2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | US-A-3 958 377 (MILNER) <br><br> --- | | |
| A | US-A-3 516 553 (RESKE) <br><br> --- | | |
| A | US-A-3 087 581 (PITMAN) <br><br> --- | | |
| A | DE-A-2 927 122 (RéHM) <br><br> ----- | | |
| | | | DOMAINES TECHNIQUES RECHERCHES (Int. Cl. ³) |

Le présent rapport de recherche a été établi pour toutes les revendications

| Lieu de la recherche | Date d'achèvement de la recherche | Examinateur |
|---|---|---|
| LA HAYE | 09-05-1984 | VAN DEN BERGHE E.J.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82